# EUROPEAN PATENT SPECIFICATION

(11) **EP 4 641 190 B1**
(45) Date of publication and mention of the grant of the patent: **28.10.2026**
(21) Application number: 24382436.4
(22) Date of filing: 23.04.2024
(51) Int. Cl.: G01N 29/04, G01N 29/06, G01N 29/265, G01N 29/44

(54) **SYSTEM AND METHOD OF COMPOSITE MATERIALS INSPECTION FOR AERONAUTICS**
SYSTEM UND VERFAHREN ZUR PRÜFUNG VON VERBUNDWERKSTOFFMATERIALIEN FÜR DIE LUFTFAHRT
SYSTÈME ET PROCÉDÉ D'INSPECTION DE MATÉRIAUX COMPOSITES POUR L'AÉRONAUTIQUE

(43) Date of publication of application: 29.10.2025
(73) Proprietor: AIRBUS OPERATIONS, S.L.U., 28906 Getafe (Madrid) (ES)
(72) Inventor: MIGUEL GIRALDO, Carlos, 28906 GETAFE (Madrid) (ES)
(74) Representative: Herrero & Asociados, S.L.

(56) References cited:
- CN-A- 113 012 123
- CN-A- 114 487 096

## Description

### Field of the invention

The present invention relates to the field of Artificial Intelligent (AI) systems as part of computer science, within the software and information technology, and specially applied to aeronautics industry.

More particularly, the present invention refers to a system and method for automatically performing Non-Destructive Inspection (NDI) and data processing during the production and repair phases of aeronautical composite material components, based on a methodology to create, develop and apply Al for the specific needs in aeronautics.

### Background of the invention

The Non-Destructive Testing (NDT) or Non-Destructive Inspection (NDI) of aeronautical composite material components after their manufacturing process is a mandatory task in aeronautics both from the standpoint of Certification and the quality control process in Production. Today, this process is fundamentally carried out, given the intrinsic characteristics of the composite materials in the aeronautical and their defectology, through the Ultrasound Testing (UT) method using its various techniques: single-channel pulse-echo, transmission, and reflective plate, as well as Phased Array (PA) in its most modern versions. The most important requirements of these inspections in this manufacturing scenario are, apart from the reliability of the inspection to every time detect any heterogeneity that can affect to the structural integrity of the material, the repeatability, and reduction of scanning and processing times. One of the key aspects to achieve these requirements is the reduction of the human factor and the automation/robotization of the processes and operations.

CN 113012123 A discloses a system for non-destructive inspection of carbon fiber composite materials comprising an ultrasound inspection equipment for obtaining C-scan data and a processor for receiving and analysing the inspection raw data using a neural network in order to identify and classify defects in the inspected composite materials.

Despite continuous efforts, there is still room for improvement not only in the automation and simplification of processes but even in the classification, and identification of defects or indications that may have an impact on the structural health of the components. Some of these defects are not easily characterised through current procedures. The conventional techniques for the analysis of inspection data (i.e., using UT) to detect and classify defects essentially consist of analysing a very small part of the (scanning) signal in the time domain, more particularly, the amplitude of the backwall echoes as well as the intermediate echoes and the Time-of-Flight (ToF) of each of the echoes, and apply criteria comparing these parameters with the ones expected in a material without defects.

Therefore, it is highly desirable to provide and qualify an intelligent system to perform automatic processing of NDI data for aeronautical composite parts, which improves the efficiency, reliability, and effectiveness of indication classifications of inspection processes in alignment with manufacturing paradigms in Industry 4.0, by using machine learning (ML) algorithms to identify and classify subtle defects that require today a lot time and resources to be properly classified by conventional methods and so improve the sensitivity, precision and time of the inspection.

### Summary of the invention

The present invention solves the aforementioned problems and overcomes previously explained state-of-art work topics by providing an artificial intelligent system and method of non-destructive inspection (NDI) for composite materials, which can be integrated within the process of work and development of technologies necessary for the complete digitalization of production plants and the concept of Industry 4.0.in aeronautics. The present invention allows an automatic analysis of NDI data and automatic recognition of defects and their classification through previously created and trained artificial intelligence (AI) models.

The present invention integrates different technologies/processes:
- Inspection technologies based on the Ultrasonics (UT) with its most modern techniques, such as Phased Array (PA) using TFM (Total Focusing Methodology) and PCI (Phased Coherence Imaging). Additionally, the advanced version of X-Ray Computed Tomography is used, integrating spot sizes even smaller than 1 micron and digital detectors of the highest sensitivity, offering resolutions of a few microns in spatial terms.
- A complete automation of the processes for preparing and positioning of components and/or parts of components, as well as the automatic scanning process of the parts/ components for the acquisition of inspection data. The inspection systems and mechanical scanning as a whole are synchronized in spatial and temporal terms.
- The processing of data for the extraction, characterization, and decision-making based on artificial intelligence (AI) regarding detected defects in the composite materials of the parts/ components, which is carried out through a prior and simultaneous process with the serial inspection. The Al models are tailored for each of the different possible defects in each of the possible pieces/components to be inspected.
- Cloud shared resources in which all the obtained inspection information by the previous means/ processes is distributed, stored, and processed. These Cloud resources are associated and shared among the manufacturing or production plants and suppliers through a previously established security protocol. The goal is not only to centralize storage and computing resources but also to allow, through all inspection data, to continue feeding and training Al models to achieve greater reliability and precision in the results.

An aspect of the present invention refers to a method for non-destructive inspection of aeronautical composite materials comprising the following steps:
- for a composite material part given as input to the method, generating raw inspection data by ultrasonics (UT) inspection using phased array, total focusing methodology, and/or phased coherence imaging techniques;
- to complement the inspection data, obtaining volumetric information of the composite material part by computed tomography (CT) inspection;
- receiving and processing the inspection data generated by the UT and CT inspection, performed by ultrasonics inspection equipment and computed tomography module respectively, through data processing means of cloud-shared resources;
- applying a set of artificial intelligence (AI) models to identify defects within the composite material part, where the artificial intelligence models (140) are trained using an inspection dataset obtained from the ultrasonics inspection equipment and the computed tomography module;
- classifying, according to a pre-defined list of defect types, the type of identified defects in the composite material part using each model from the set of Al models; and
- providing a classification output information for the composite material part based on the classification of the type of identified defects within the composite material part, thereby enabling the identification and categorization of defects within the composite material parts in a non-destructive and efficient manner.

Another aspect of the present invention refers to a system implementing the non-destructive inspection method described above for composite materials in the production line of aeronautical components/parts.

The invention is defined by the independent claims. The dependent claims define advantageous embodiments.

The present invention has a number of advantages with respect to prior art, which can be summarized as follows:
- Improvement in Inspection Sensitivity and Precision: Current NDI methods, including various ultrasound techniques, require sometimes a complex and very laborious manual procedure to adequately detect and classify some types of defects, particularly subtle or complex ones. The present invention seeks to enhance the NDI data processing, enabling the automatic detection, identification and classification of structural defects that are currently not easily categorized with existing procedures.
- Reduction of Human Intervention: The reliance on human operators for data analysis in NDI processes can introduce variability and potential for error, not to mention fatigue and the associated risks. The present invention aims to automate data analysis, thus reducing human intervention and the potential for human error, and addressing issues related to operator fatigue.
- Enhancement of Inspection Speed: The time taken for scanning and processing in the current NDI methods can be significant. This invention targets the reduction of essentially the processing time, aiming for a more efficient inspection process that can fit better within the production timelines, thereby improving the overall efficiency of the manufacturing and inspection processes.
- Automation and Robotization: There's a recognized need to further automate and possibly robotize the NDI processes to achieve higher repeatability and reliability. The present invention aims to address the need for more automated systems that can perform inspections with minimal human oversight.
- Integration with Industry 4.0: Moving towards the complete digitalization of (local and external) production plants of an enterprise and aligning with the concepts of Industry 4.0 represents a significant technical challenge. The present invention seeks to guide the development of new NDI processes that are fully integrated with digital manufacturing ecosystems, leveraging advancements in artificial intelligence and machine learning for data analysis and decision-making. Inspection data processing from worldwide manufacturing plants can be performed from a cloud-based software managed by the core location of the enterprise. This also can lead to the simplification of the certification requirements of personnel performing scanning NDT.
- Compiling NDT production data of all the parts from worldwide plants and suppliers associated with the enterprise provides also valuable information to perform an innovative follow up of the evolvement of the quality process of the Plants (i.e., deterioration of the tooling, materials durability or drilling or trimming process among others)
- Overcoming improvement aspects in Composite Material Inspection: The specific challenges associated with inspecting composite materials, such as assessment of porosity when surfaces are not parallel, multiple delamination, and other indications that may require a lot of effort by current NDI techniques, are a major focus of this invention. It aims to simplify some of the current bottleneck in NDT Production and improve the capability to automatically classify a wide range of composite material indications.
- Adaptability and Scalability: The invention seeks to provide a scalable and adaptable solution that can be applied across different production plants and subcontractors, which involves creating a system that can handle the variability and specificity of different manufacturing environments and composite material applications.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a schematic diagram of how the intelligent system for NDI of composite materials for aeronautical components works, according to a preferred embodiment.
Figure 2 shows a schematic diagram of the inspection data and defects classification used by the system, according to a possible embodiment.
Figure 3 shows a schematic diagram of how the artificial intelligent models are created, trained and validated for using the NDI system of composite materials in a production line of aeronautical components, according to a possible embodiment.
Figure 4 shows a conceptual representation of the global data management and automation of processes involved in the NDI system, according to the preferred embodiment, to explain the interrelation of the system components interconnected over internet among different production plants in various geographical locations and the flow of data for NDI managed from various points of the world.

### Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

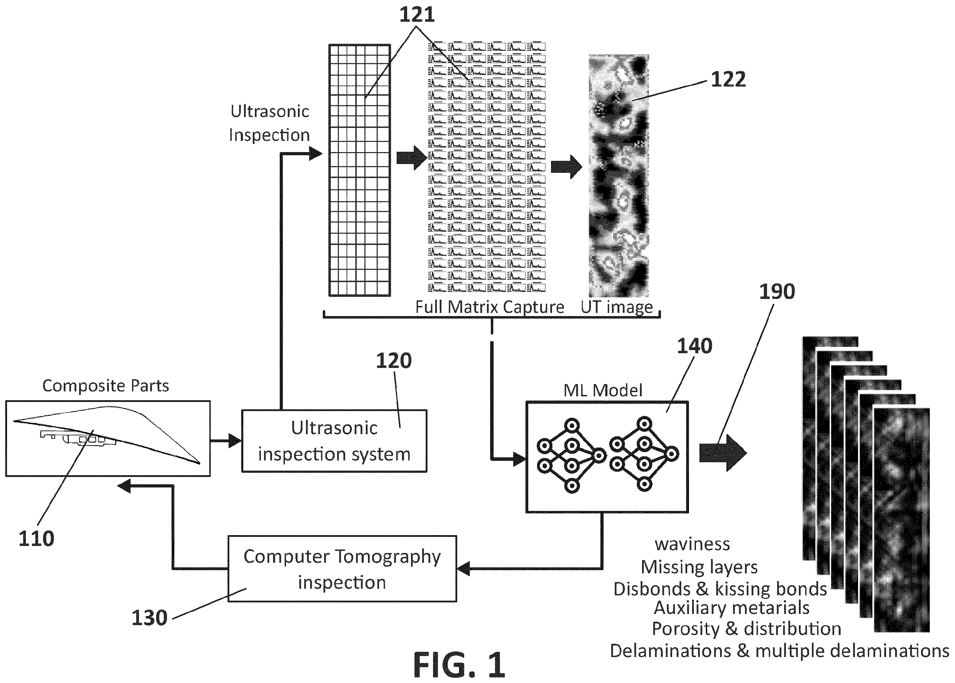

Figure 1 presents a schematic view of a globalized NDI system, according to a preferred embodiment, which performs the inspection during the production or repair phase of aeronautical composite material components. Figure 1 illustrates schematically how the NDI system allows the improvement of artificial intelligence (AI) models for evaluating composite material series parts. Figure 1 also highlights the input flow of the composite material series parts that are to be inspected by the system. This integrated approach ensures a methodology of continuous inspection and improvement, where specific input data from the series parts facilitate the adaptation and optimization of Al models for specific applications in the field of composite materials. Firstly, the aeronautical composite material parts **110, 210** in production are input to be inspected by the system, wherein the inspection is based on UT or ultrasonic (PA, TFM, and PCI) methods implemented by ultrasonics inspection equipment **120** and computed tomography (CT) to obtain inspection data in a computed tomography module **130.** The NDI system also integrates artificial intelligence (AI) modules/models **140,** (previously trained and) fed by means of the (inspection training dataset and) inspection data, obtained by the UT equipment **120** and CT equipment **130.** The CT inspection process is only applied in the production phase and only in particular cases where the system needs to tune the Al models **140** by using tomography data. The CT equipment **130** can also be a support in production inspections for specific situations where a second inspection is required for decision-making about the acceptance or rejection of the parts. The Al models **140** are generated for the detection, characterization, classification, and reporting of indications related to the presence (or not) of possible defects regarding the composite material input.

Unlike prior-art NDI processes, the reference standard parts (composite material input) used in the inspection performed by the proposed system shown in Figure 1 and mandatory according to Quality NDT Procedures can include not only artificial defects inserted in a thickness steps but also other types of defects such as porosity, porosity distributed in a particular way, missing layer defects, or inserts of different auxiliary materials characteristic of the production process that can be detected and classified by artificial intelligence (AI) models **140** even as a mechanism to ensure that the process is working correctly. The requirement of these wide and representative defects in the reference standards can be also make imperative by the new qualification process to be followed to ensure the reliability and repeatability of the complete inspection process. The proposed system is based on a methodology to create, train, develop, mature, apply and validate the set of artificial intelligent models **140** configured to classify diverse type of defects according to a pre-defined list of defect types (defectology) and provide information in a classification output **(190),** which is the NDT output after applying acceptance criteria and classification.

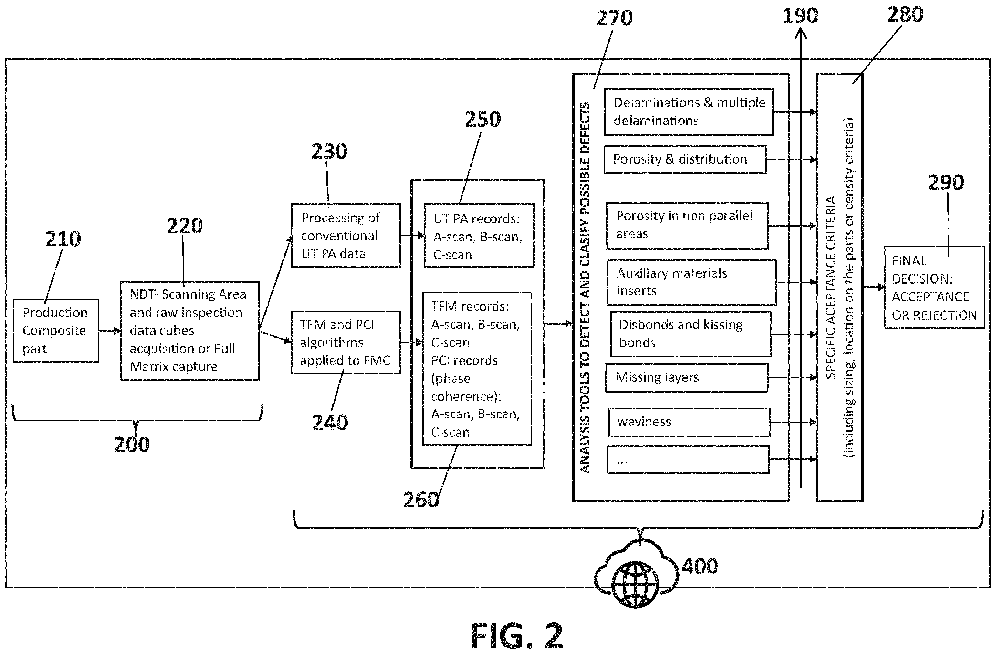

Figure 2 shows in detail the defectology or different types of defects **270** to be covered which accounts for practically 100% of the relevant indications that can appear in the ultrasound inspection of aeronautical composite materials (e.g., carbon fiber reinforced plastic or CFRP: parts): delaminations, multiple delaminations, detection of porosity and its distribution (not only in parts with parallel faces but also in ramp configurations), disbonding in stiffened skin-stringer configurations, including "kissing bonds" detection of wrinkles within the material, detection of foreign objects from the manufacturing process, auxiliary material inserts, ply waviness, and detection of defects in the number of layers (missing of layers, included) as a result of inaccuracies in the process of taping composite materials during the production stage and intralaminar cracks networks. As shown in Figure 2, the production or manufacturing plants **200** of an aircraft manufacturer over the world start the NDT or non-destructive inspection by scanning the composite material parts **210** within a scanning area to generate **220** one or more cubes of raw inspection data or Full Matrix Capture (FMC). The FMC is the output data of the Ultrasonics (UT): processing of conventional UT Phased Array (PA) data **230** delivers its output to UT PA records **250** storing A-scan, B-scan and C-scan data; algorithms **240** configured to perform Total Focusing Methodology (TFM) and Phased Coherence Imaging (PCI) delivers its output to TFM and PCI records **260** storing A-scan, B-scan and C-scan data. Thus, all these output data from the UT is used by the Al models that constitute the analysis tools of detection and classification of the wide diversity of defect types **270** and, in turn, the classification outputs **190** from each of the Al models are filtered by specific acceptance criteria **280** including sizing, location on the parts or density criteria, so that the NDI system can provide a final result **290** of the inspected composite material part **210** indicating whether the composite material part **210** is ultimately acceptable or rejectable.

It is worth highlighting that all the inspection information is distributed in servers, stored in databases or other storage means, and processed by computing means which finally make decisions, wherein the servers, storage, databases and computing means are shared resources over the Cloud **400.** The NDI system requires equipment with a high capacity to analyze a huge amount of data quickly and accurately and also meets the requirement to establish a methodology of operation and continuous model learning from the systematic feeding of real non-destructive inspection data of parts and components that are manufactured daily in different plants around the world. Thus, the process requires the development and learning of models on an open platform to be able to interact with the input and output signals of the Al models from the different Manufacturing/Inspection Plants of the aircraft manufacturer and even other Suppliers. Therefore, a cloud security mechanism that integrates the correct management of control permissions, using encrypted and secure data, and fully protected against external and internal threats is also implemented by the NDI system.

The concept of developing machine learning models and their validation based on the deployment of shared resources interacting in the Cloud **400** allows:
- Better use of hardware and software resources, and greater ease in training and refining models with a larger volume of real data.
- Reduce development and updating times.
- Save costs by sharing software platforms among Manufacturing/Inspection Plants, as well as allowing access to the applications from any Plant or Supplier in the world.
- Possible simplifications in the process of qualifying the inspection process of Plants by having shared resources in the cloud.
- Support the identification of patterns in the behaviour of the manufacturing/inspection Plants, the prediction of defects, and the identification of areas for improvement in each of the Plants by analyzing the systematic feeding of real non-destructive inspection data.

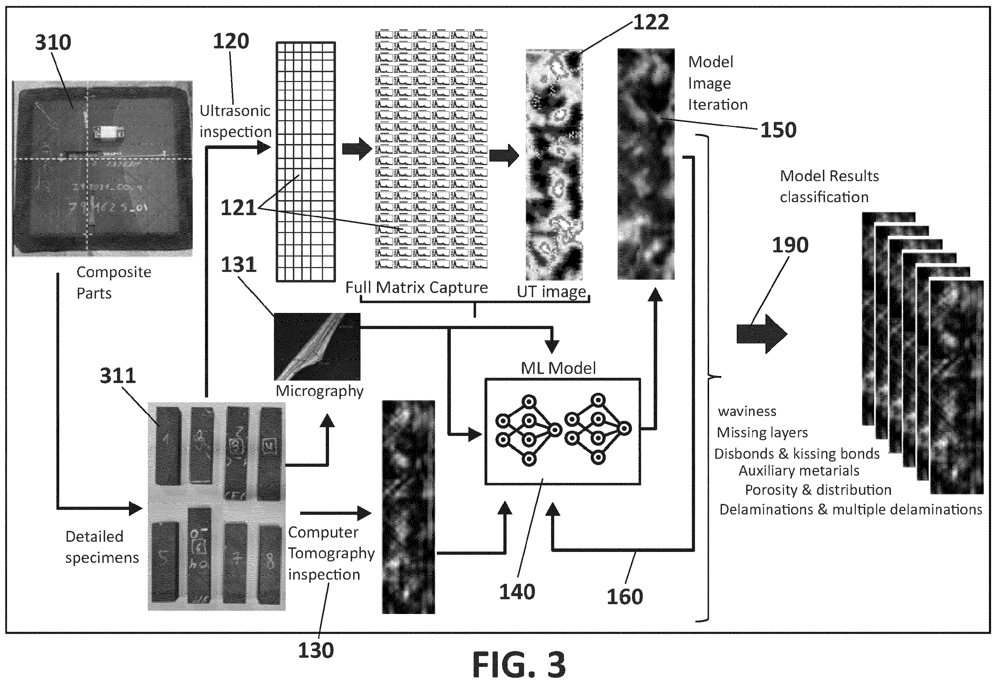

Returning to Figure 1 which shows the equipment of the NDI system, once the curing and demoulding phase of the composite material parts **110, 210** in the autoclave is concluded, the parts or detailed specimens **111** are ready for the inspection phase. The necessary elements are:
- Ultrasonics (UT) inspection equipment **120** with the electronic capabilities to introduce delays in the excitation and reception of the phased array probes according to the most diverse needs for grouping of elements and sequence. The various configurations of excitation and delay ultimately introduce an acoustic field inside the material with different pressure and intensity distributions so that any discontinuity inside it produces a reflection echo, diffraction, attenuation of reference echoes, or ultimately a change in the spectrum of the signal received by the probe compared to what is expected in a homogeneous material. Examples of these electronic capabilities are the TFM (Total Focusing Methodology) or PCI (Phased Coherence Imaging) techniques. These techniques have in common the introduction of sound fields into the material that optimize sensitivity to detect and resolve internal details. These techniques generate a Full Matrix Capture **121** (FMC) or cube of raw inspection data that essentially contains information from inside the part and only the physical conditions in terms of frequency mark the limits of sensitivity and definition. The UT inspection data record associated with a given composite part can be previously treated through another file associated with the same given composite part that focuses on determining the roughness and its effect on the UT files of the given part. This roughness correction file can be obtained, for example, through an optical or mechanical profilometer or through a prior UT inspection but placing an acquisition gate at the entrance to the part. Through this process, the influence of surface roughness on the ultrasound inspection results is eliminated.
- Machine learning (ML) algorithms, run by data processing means of cloud-shared resources, for detection and classification of defects: The analysis and processing of the raw inspection data from the FMC **121** and from the UT image **122,** obtained in the scanning of the detailed specimen **111** performed by the ultrasonics inspection equipment **120,** are performed through artificial intelligence (AI) models **140** that have been created, trained, matured, and validated through a process detailed below:
   a. First, it is necessary to start with real or representative composite material parts/samples that include completely healthy samples as well as parts with each of the possible defect types **270** to detect: delaminations, multiple delaminations, detection of porosity and its distribution (not only in parts with parallel faces but also in ramp configurations), unglued areas, false bonds, detection of wrinkles within the material, detection of foreign objects from the manufacturing process, and detection of defects in the number of layers as a result of inaccuracies in the composite material taping process during the production stage.
   b. Second, as previously explained, a series of inspection data cubes are generated that have been obtained through various modifications in the inspection variables. Each of these modifications aims to optimize the inspection results to maximize some of the possible discontinuities to detect. The following list is an example of the possible inspection variables that generate different data cubes susceptible to being analyzed later by artificial intelligence models **140:**
      i. Inspection frequency (2, 3.5, 5, and 10 MHz)
      ii. Probe configuration and dimensions (Pitch and active and passive dimension)
      iii. Aperture (6, 8, 2, 16, 24, and 32)
      iv. Step (1,2, and 3)
      v. TCG (Time Correction Gain) - exercised by hardware or software
      vi. Scanning configuration (horizontal or vertical)
      vii. Index (from even <1mm)
      viii. Use of external focusing lenses
   c. Third, it is necessary to perform the inspection by computed tomography (CT) at maximum resolution (a few microns) of all the selected parts. The CT process implemented by the computed tomography module **130** requires a minimum time that can be even on the order of hours, but it provides a 3D volume of the part with all the information about indications and defectology present in the parts. Apart from the 3D information of high-resolution volumes obtained by CT, extraction of sections and analysis by micrography **131** or even SEM (scanning electronic microscopy) are or can be carried out in particular cases to confirm the validity of the information obtained by the scanning process and image composition by CT. The CT and UT inspections are carried out coherently to be able to later compare and correlate results pixel by pixel in each of the obtained images and taking into account the different resolutions that may be applied between the UT and CT files in the same locations. The correlation of the successive UT files of the different composite parts and even the correlation of the UT files with CT are carried out accurately through specific references on the part. In those cases where it is possible, these references are intrinsic details of the part considering that they must be appreciable in all the parts that must be compared by any of the methods and inspection techniques used (UT: PA, TFM, or PVI) and CT. In other cases where this is not possible, markers are inserted in the manufacturing process. Preferably, there are at least three markers to be able to position and orient the parts accurately before making the comparison regardless of the orientation of the record.
   d. Fourth, the creation of the Al models **140** that receive as input data the raw UT data (the corresponding data cubes from each of the scans performed) and through their machine learning algorithms extract and classify each of the defects. A model is required for each category of defects. In each model belonging to the set of artificial intelligent models **140** integrated by the system, the following architecture is distinguished:
      - The model input layer with a number of neurons according to the dimensions of the composite material part **110, 210** to be inspected and resolution of the inspection. This layer receives the UT inspection results, pixel by pixel extracted from the UT image **122,** as an amplitude file versus time or distance for each of the possible positions taken by the inspected composite material part **110, 210.**
      - The intermediate layers of the model are defined based on each composite part and material and the number of defects required to categorize a type of defect in the composite material part **110, 210** to be inspected.
      - The specific parameters of the network (number of internal layers, weights, biases, or activation functions of each neuron) are defined in the development and learning process, described below and shown in Figure 3.
      - The output layer has as many neurons as categories of defects (delaminations, multiple delaminations, detection of porosity and its distribution - not only in parts with parallel faces but also in ramp configurations, debonding in stiffened skin-stringer configurations, even "kissing bonds" detection of wrinkles within the material, detection of foreign objects, lack of layers or interlaminar cracks networks).

In a preliminary stage, the Al models **140** are created and trained using selected composite parts containing selected defects, as shown in Figure 3. The real information of the composite part used as dataset in the learning and validation phase is obtained from three pathways:
a) Computed tomography for an initial phase of model creation, and a more advanced subsequent phase in the training process but that requires a deeper analysis due to the present defectology or specific difficulties in identification and classification.
b) Ultrasound data processed manually by experts in ultrasonic data analysis.
c) Analysis of images of the interior of the material at a micro or even nano level. This pathway is applied to very specific cases that may require a deeper detail of the inside of the material or in case of doubts with the previous methods.

Figure 3 provides a flowchart detailing the specific process used by the system for the creation and improvement of reliable Al models. Thus, selected composite material parts **310** are split into detailed specimens **311** and each of them is a composite material input for a workflow to create each of these classification Al models **140** as follows:
i. The model creation process starts from selecting representative samples/parts that contain characteristic defects that are defined as target defects to be automatically detected and classified by the model. The corresponding inspection data cubes (raw inspection data) based on the selected representative samples/parts are obtained by the UT inspection equipment **120.** On the other hand, the representative samples/parts are also input into the CT module **130** to obtain the CT inspection results that comprises a recreation of a three-dimensional volume of the selected part containing complete, detailed information about its geometry, both surface and interior.
ii. The initial dataset to start creating the Al models **140** are divided into three blocks: data for learning, data for testing the model, and data for validating the model.
iii. Choice of the computational architecture of the model or algorithm: The algorithms correspond to a convolutional neural network that learns directly from the input data and allow identifying patterns in the input data in order to recognize objects, classes, and categories of defects, and extract their features. These algorithms merge the input signal (i.e., the UT data cubes) with pattern signals (called convolution kernel) that are applied in different layers to obtain a filtered output signal that through an iterative learning process is intended to contain the notable information according to the imposed detection criteria (delaminations, porosity, foreign objects, ...). The model outputs **150** are compared pixel by pixel with the CT information which is used as the reference information. In addition, the error and corresponding PoD (probability of detection) analysis are calculated (an essential premise for the adequate qualification of the process). The ultimate goal is that rapid UT inspection and subsequent data analysis by Al models allow obtaining information similar to that obtained by CT but in a much shorter time.
iv. Optionally, the phase of creation and maturation of models can also make use of past inspection data, wherein the past inspection data are previously reconstructed into an appropriate format.
v. Finally, these models can be the result of an abstract analysis based on sequential algorithms obtained and refined from experimental data and without defined physical laws, so the practical experience and knowledge of specialists are fundamental in the validation process.

Once the created Al models **140** are implemented and qualified with a minimum established level of reliability, the inspection results continuously feed **160** these models delivering the classification outputs **190** for the different defects distinguished according to a pre-defined defectology which each Al model is configured to detect/identify. Thus, the system allows for continuous iteration, where the Al models **140** are successively refined through cycles of feedback and improvement, ensuring a constant evolution towards optimal efficacy and reliability. This iterative and feedback-based approach underscores the system's ability to adapt and continuously improve, emphasizing the importance of a perpetual improvement cycle in creating reliable Al models for the inspection of composite materials. In this way, after the UT and CT non-destructive inspection processes and extraction of the inspection data in the form of a data cube, these results are introduced into the created Al models **140** configured to indicate: i) whether there are defects or not, ii) what type of defects from the pre-defined (defectology) list of defect types **270,** iii) whether they are compatible or not with the acceptance criteria **280** (including criteria of dimensions, size, location on the parts, or criteria of defect density), and iv) a final decision selected between acceptance or rejection of the inspected composite material part **110, 210, 310.**

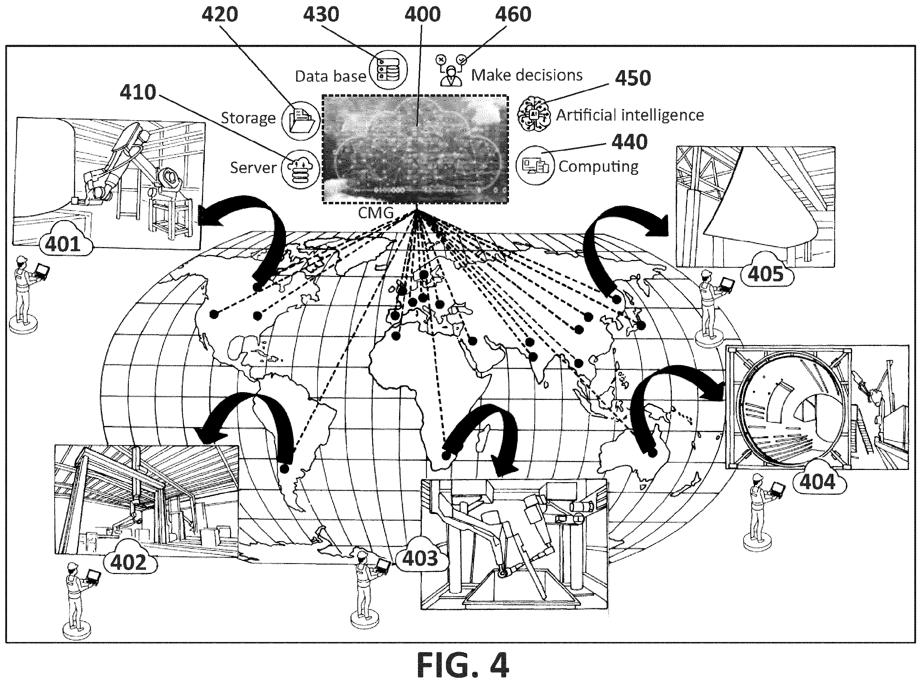

Figure 4 summarizes all the NDT inspection equipment interconnected among each of the production plants **401, 402, 403, 404, 405** from an aircraft manufacturer and its subcontractors. The analysis of inspection results, whose data flows between components of the cloud management gateway (CMG), is carried out on software and models that are in the Cloud **400** (the Internet). The process of model validation and learning is also executed from the cloud **400.** The cloud-shared resources comprise servers **410,** storage **420** and databases **430,** pre-built ML services and tools provided by an Al platform **440** and computing means **450** configured to distribute, store, and process inspection information containing the raw inspection data. The fact that the models are fed with all the data of aeronautical composite parts from all the plants allows for the use of 100% of the inspection results of the parts, continuous training of the models, and guarantees that data from all possible defect categories are obtained. The availability of all the inspection data from all the parts sequentially allows for additional analysis of the process evolution from the NDI inspection data with the ultimate goal of predicting possible defects and making decisions **460.** It is possible to establish as an additional category in the model's output not to report defects but the possible degradation of the process over time. In other words, the consecutive comparison of the inspection files of each part at each plant allows the creation of a parameter associated with a composite part, the parameter being characteristic of the process and related to the integrity and deterioration of the process globally. This parameter fundamentally depends on the tools, the mechanics and electronics of the inspection equipment, or the lifespan of the materials, among others. The study of this parameter and its definition helps to anticipate the maintenance processes of the inspection machines, review of tooling, or calibration of autoclaves.

## Claims

1. A non-destructive inspection system for inspecting composite material parts (110, 210) in a production line of aeronautics, the system comprising:
- ultrasonics inspection equipment (120) configured to generate raw inspection data of the composite material parts (110, 210) by using phased array, total focusing methodology, and/or phased coherence imaging;
- a computed tomography module (130) configured to obtain information of volumes of the composite material parts (110, 210);
the system **characterized by** further comprising data processing means of cloud-shared resources configured to receive and process the raw inspection data generated by the ultrasonics inspection equipment (120) and the information obtained by the computed tomography module (130) and to apply a set of artificial intelligent models (140) created to identify defects within the composite material parts (110, 210), the artificial intelligent models (140) trained using an inspection dataset obtained from the ultrasonics inspection equipment (120) and the computed tomography module (130), and each model from the set of artificial intelligent models (140) configured to classify a type of the identified defects according to a pre-defined list of defect types (270) and provide a classification output (190) information.

2. The system according to claim 1, wherein the cloud-shared resources comprise, over the cloud (400), servers (410), storage (420), databases (430), artificial intelligent platform (440) and computing means (450), configured to distribute, store, and process inspection information containing the raw inspection data generated by the ultrasonics inspection equipment (120), the information obtained by the computed tomography module (130) and the classification output (190) information provided by the set of artificial intelligent models (140).

3. The system according to claim 2, wherein the cloud-shared resources implement a cloud security mechanism with encrypted and secure data management of the inspection information.

4. The system according to any preceding claim, wherein the artificial intelligent models (140) are implemented by a convolutional neural network configured to identify patterns for recognizing representative composite material parts, classifying the recognized parts and identifying types of defects for each class of composite material part, by merging the raw inspection data generated by the ultrasonics inspection equipment (120) with a convolution kernel of pattern signals to obtain, through an iterative learning process, an output signal comprising information according to the pre-defined list of defect types (270)., and by comparing the output signal pixel by pixel with the information obtained by the computed tomography module (130).

5. The system according to any preceding claim, wherein each model from the set of artificial intelligent models (140) is configured to provide a classification output (190) which is filtered by acceptance criteria (280) including sizing, location and density criteria of the identified defects and a final result (290) indicating whether the composite material parts (110, 210) are acceptable or rejectable according to the acceptance criteria (280).

6. The system according to any preceding claim, wherein each model from the set of artificial intelligent models (140) is created by:
- incorporating an input layer of a convolutional neural network comprising a number of neurons corresponding to the dimensions of a selected composite material part (310) under inspection and the resolution of the inspection, said input layer configured to receive the raw inspection data generated by the ultrasonics inspection equipment (120) for each position of the selected composite material part (310),
- including at least an intermediate layer of the convolutional neural network defined based on the material of the selected composite material part (310) and a number of defects to be categorized within the selected composite material part (310),
- defining parameters for the neural network configuration, the parameters selected from the number of included internal layers, weights, biases, and activation functions of each neuron;
- incorporating an output layer of the convolutional neural network comprising a number of neurons equal to the number of defects to be categorized according to the list of defect types (270).

7. The system according to any preceding claim, wherein the raw inspection data includes full matrix capture, FMC, data.

8. The system according to any preceding claim, wherein the list of defect types (270) is defined to include delaminations, multiple delaminations, porosity and its distribution, disbonding in stiffened skin-stringer configurations, wrinkles, foreign objects from the manufacturing process, auxiliary material inserts, ply waviness, missing layers, intralaminar cracks networks and inaccuracies in taping composite materials in the production line.

9. The system according to any preceding claim, wherein the artificial intelligence models (140) are trained using a combination of real representative parts that include both healthy samples and parts with defects pre-defined in the production line.

10. A method of non-destructive inspection of aeronautical composite material parts (110, 210, 310), the method comprising the following steps:
- generating raw inspection data of a composite material part (110, 210, 310) by ultrasonics inspection equipment (120) using phased array, total focusing methodology, and/or phased coherence imaging techniques;
- obtaining volumetric information of the composite material part (110, 210, 310) using a computed tomography module (130);
- receiving and processing the raw inspection data generated by the ultrasonics inspection equipment (120) and the volumetric information obtained by the computed tomography module (130) through data processing means of cloud-shared resources;
- applying a set of artificial intelligence models (140) to identify defects within the composite material part (110, 210, 310), where the artificial intelligence models (140) are trained using an inspection dataset obtained from the ultrasonics inspection equipment (120) and the computed tomography module (130);
- classifying, according to a pre-defined list of defect types (270), the type of identified defects in the composite material part (110, 210, 310) using each model from the set of artificial intelligence models (140); and
- providing a classification output (190) information for the composite material part (110, 210, 310) based on the classification of the type of identified defects within the composite material part (110, 210, 310).

11. The method according to claim 10, further comprising filtering the classification output (190) by acceptance criteria (280) including sizing, location and density criteria of the identified defects and providing a final result (290) indicating whether the composite material part (110, 210, 310) is acceptable or rejectable according to the acceptance criteria (280).

12. The method according to any of claims 10-11, wherein applying the set of artificial intelligence models (140) comprises:
- merging raw inspection data generated by ultrasonics inspection equipment (120) with a convolution kernel of pattern signals to identify patterns representative of composite material parts;
- recognizing classes of composite material parts based on the identified patterns through an iterative learning process facilitated by the convolutional neural network;
- classifying the recognized composite material parts into specific classes and identifying types of defects for each class of composite material part, where the identification and classification are based on a pre-defined list of defect types (270);
- obtaining an output signal from the convolutional neural network that comprises information related to the classified defect types through the iterative learning process;
- comparing the output signal, pixel by pixel, with information obtained by a computed tomography module (130) to verify and refine the accuracy of defect identification and classification for the composite material parts.

13. The method according to any of claims 10-12, further comprising training the artificial intelligence models (140) using a combination of real representative parts that include both healthy samples and parts with defects pre-defined in the production line.

14. The method according to any of claims 10-13, further comprising creating each model from the set of artificial intelligent models (140) by:
- incorporating an input layer of a convolutional neural network comprising a number of neurons corresponding to the dimensions of a selected composite material part (310) under inspection and the resolution of the inspection, said input layer configured to receive the raw inspection data generated by the ultrasonics inspection equipment (120) for each position of the selected composite material part (310),
- including at least an intermediate layer of the convolutional neural network defined based on the material of the selected composite material part (310) and a number of defects to be categorized within the selected composite material part (310),
- defining parameters for the neural network configuration, the parameters selected from the number of included internal layers, weights, biases, and activation functions of each neuron;
- incorporating an output layer of the convolutional neural network comprising a number of neurons equal to the number of defects to be categorized according to the list of defect types (270).

15. The method according to any of claims 10-14, further comprising defining the list of defect types (270) to include delaminations, multiple delaminations, porosity and its distribution, disbonding in stiffened skin-stringer configurations, wrinkles, foreign objects from the manufacturing process, auxiliary material inserts, ply waviness, missing layers, intralaminar cracks networks and inaccuracies in taping composite materials in the production line.

## Patentansprüche

1. Zerstörungsfreies Prüfungssystem zur Prüfung von Verbundwerkstoffteilen (110, 210) in einer Fertigungslinie der Luftfahrt, wobei das System aufweist:
- ein Ultraschallprüfgerät (120), das so ausgebildet ist, dass es Rohprüfdaten der Verbundwerkstoffteile (110, 210) unter Verwendung von Phased-Array-, Total-Focusing- und/oder Phased-Coherence-Bildgebung erzeugt;
- ein Computertomographiemodul (130), das dazu ausgebildet ist, Informationen über die Volumina der Verbundwerkstoffteile (110, 210) zu erhalten;
wobei das System **dadurch gekennzeichnet ist, dass** es ferner Datenverarbeitungsmittel von gemeinsam genutzten Cloud-Ressourcen aufweist, die so ausgebildet sind, dass sie die von dem Ultraschallprüfgerät (120) erzeugten Rohprüfdaten und die von dem Computertomographiemodul (130) erhaltenen Informationen empfangen und verarbeiten sowie einen Satz von Modellen künstlicher Intelligenz (140) anwenden, die zur Identifizierung von Fehlern in den Verbundwerkstoffteilen (110, 210) erstellt werden, wobei die Modelle künstlicher Intelligenz (140) unter Verwendung eines Prüfdatensatzes trainiert werden, der von dem Ultraschallprüfgerät (120) und dem Computertomographiemodul (130) erhalten wird, und wobei jedes Modell aus dem Satz von Modellen künstlicher Intelligenz (140) so ausgebildet ist, dass es einen Typ der identifizierten Fehler gemäß einer vordefinierten Liste von Fehlertypen (270) klassifiziert und eine Information zur Klassifizierungsausgabe (190) bereitstellt.

2. System nach Anspruch 1, wobei die gemeinsam genutzten Cloud-Ressourcen über die Cloud (400) Server (410), Speicher (420), Datenbanken (430), eine Plattform für künstliche Intelligenz (440) sowie Rechenmittel (450) aufweisen, die so ausgebildet sind, dass sie Prüfinformationen verteilen, speichern und verarbeiten, welche die von dem Ultraschallprüfgerät (120) erzeugten Rohprüfdaten, die von dem Computertomographiemodul (130) erhaltenen Informationen sowie die von dem Satz von Modellen künstlicher Intelligenz (140) bereitgestellten Informationen zur Klassifizierungsausgabe (190) enthalten.

3. System nach Anspruch 2, wobei die gemeinsam genutzten Cloud-Ressourcen einen Cloud-Sicherheitsmechanismus mit verschlüsselter und sicherer Datenverwaltung der Prüfinformationen implementieren.

4. System nach einem der vorstehenden Ansprüche, wobei die Modelle künstlicher Intelligenz (140) durch ein Convolutional Neural Network implementiert sind, das so ausgebildet ist, dass es Muster zur Erkennung repräsentativer Verbundwerkstoffteile identifiziert, die erkannten Teile klassifiziert und Fehlertypen für jede Klasse von Verbundwerkstoffteilen identifiziert, indem es die von dem Ultraschallprüfgerät (120) erzeugten Rohprüfdaten mit einem Faltungskern von Mustersignalen zusammenführt, um durch einen iterativen Lernprozess ein Ausgangssignal zu erhalten, das Informationen gemäß der vordefinierten Liste von Fehlertypen (270) enthält, und indem es das Ausgangssignal pixelweise mit den vom Computertomographiemodul (130) erhaltenen Informationen vergleicht.

5. System nach einem der vorstehenden Ansprüche, wobei jedes Modell aus dem Satz von Modellen künstlicher Intelligenz (140) so ausgebildet ist, dass es eine Klassifizierungsausgabe (190), die anhand von Akzeptanzkriterien (280), einschließlich Kriterien hinsichtlich Größe, Lage und Dichte der identifizierten Fehler, gefiltert wird, sowie ein Endergebnis (290) liefert, das angibt, ob die Verbundwerkstoffteile (110, 210) gemäß den Akzeptanzkriterien (280) annehmbar oder ablehnbar sind.

6. System nach einem der vorstehenden Ansprüche, wobei jedes Modell aus dem Satz von Modellen künstlicher Intelligenz (140) wie folgt erstellt wird:
- Integrieren einer Eingabeschicht eines Convolutional Neural Network, die eine Anzahl von Neuronen aufweist, die den Abmessungen eines ausgewählten, zu prüfenden Verbundwerkstoffteils (310) und der Auflösung der Prüfung entspricht, wobei die Eingabeschicht so ausgebildet ist, dass sie die von dem Ultraschallprüfgerät erzeugten Rohprüfdaten (120) für jede Position des ausgewählten Verbundwerkstoffteils (310) empfängt,
- Einbeziehen mindestens einer Zwischenschicht des Convolutional Neural Network, die auf der Grundlage des Materials des ausgewählten Verbundwerkstoffteils (310) und einer Anzahl von innerhalb des ausgewählten Verbundwerkstoffteils (310) zu kategorisierenden Fehlern definiert ist,
- Definieren von Parametern für die Konfiguration des neuronalen Netzes, wobei die Parameter aus der Anzahl der enthaltenen internen Schichten, den Gewichten, den Biases und den Aktivierungsfunktionen jedes Neurons ausgewählt werden;
- Integrieren einer Ausgabeschicht des Convolutional Neural Network, die eine Anzahl von Neuronen aufweist, die gleich der Anzahl von Fehlern ist, die gemäß der Liste der Fehlertypen (270) zu kategorisieren sind.

7. System nach einem der vorstehenden Ansprüche, wobei die Rohprüfdaten Full-Matrix-Capture-, FMC, Daten enthalten.

8. System nach einem der vorstehenden Ansprüche, wobei die Liste der Fehlertypen (270) so definiert ist, dass sie Delaminationen, multiple Delaminationen, Porosität und deren Verteilung, Ablösungen in versteiften Haut-Stringer-Konfigurationen, Falten, Fremdkörper aus dem Herstellungsprozess, Einlagen aus Hilfsmaterial, Lagenwelligkeit, fehlende Schichten, intralaminare Rissnetzwerke sowie Ungenauigkeiten beim Aufbringen von Verbundwerkstoffen auf der Fertigungslinie umfasst.

9. System nach einem der vorstehenden Ansprüche, wobei die Modelle künstlicher Intelligenz (140) unter Verwendung einer Kombination aus realen repräsentativen Teilen trainiert werden, die sowohl einwandfreie Muster als auch Teile mit in der Fertigungslinie vordefinierten Fehlern enthalten.

10. Verfahren zur zerstörungsfreien Prüfung von Verbundwerkstoffteilen (110, 210, 310) für die Luftfahrt, wobei das Verfahren die folgenden Schritte umfasst:
- Erzeugen von Rohprüfdaten eines Verbundwerkstoffteils (110, 210, 310) durch das Ultraschallprüfgerät (120) unter Verwendung von Phased-Array-, Total-Focusing- und/oder Phased-Coherence-Bildgebung;
- Erhalten von volumetrischen Informationen der Verbundwerkstoffteile (110, 210, 310) unter Verwendung eines Computertomographiemoduls (130);
- Empfang und Verarbeitung der von dem Ultraschallprüfgerät (120) erzeugten Rohprüfdaten und der von dem Computertomographiemodul (130) erhaltenen volumetrischen Informationen durch Datenverarbeitungsmittel von gemeinsam genutzten Cloud-Ressourcen;
- Anwenden eines Satzes von Modellen künstlicher Intelligenz (140) zur Identifikation von Fehlern innerhalb des Verbundwerkstoffteils (110, 210, 310), wobei die Modelle künstlicher Intelligenz (140) anhand eines Prüfdatensatzes trainiert werden, der von dem Ultraschallprüfgerät (120) und dem Computertomographiemodul (130) erhalten wird; Klassifizieren des Typs der in dem Verbundwerkstoffteil (110, 210, 310) identifizierten Fehler anhand einer vordefinierten Liste von Fehlertypen (270) unter Verwendung jedes Modells aus dem Satz von Modellen künstlicher Intelligenz (140); und
- Bereitstellen von Informationen zur Klassifizierungsausgabe (190) für das Verbundwerkstoffteil (110, 210, 310) auf der Grundlage der Klassifizierung des Typs der identifizierten Fehler innerhalb des Verbundwerkstoffteils (110, 210, 310).

11. Verfahren nach Anspruch 10, das ferner das Filtern der Klassifizierungsausgabe (190) anhand von Akzeptanzkriterien (280), einschließlich Kriterien hinsichtlich Größe, Lage und Dichte der identifizierten Fehler, und das Bereitstellen eines Endergebnisses (290) umfasst, das angibt, ob das Verbundwerkstoffteil (110, 210, 310) gemäß den Akzeptanzkriterien (280) annehmbar oder ablehnbar ist.

12. Verfahren nach einem der Ansprüche 10-11, wobei das Anwenden des Satzes von Modellen künstlicher Intelligenz (140) umfasst:
- Zusammenführung der von dem Ultraschallprüfgerät (120) erzeugten Rohprüfdaten mit einem Faltungskern von Mustersignalen, um Muster zu identifizieren, die für Verbundwerkstoffteile repräsentativ sind;
- Erkennen von Klassen von Verbundwerkstoffteilen auf der Grundlage der identifizierten Muster durch einen iterativen Lernprozess, der durch das Convolutional Neural Network ermöglicht wird;
- Klassifizieren der erkannten Verbundwerkstoffteile in bestimmte Klassen und Identifizieren von Fehlertypen für jede Klasse von Verbundwerkstoffteilen, wobei die Identifizierung und Klassifizierung auf einer vordefinierten Liste von Fehlertypen (270) basieren;
- Erhalten eines Ausgangssignals aus dem Convolutional Neural Network, das Informationen zu den klassifizierten Fehlertypen enthält, durch den iterativen Lernprozess;
- pixelweises Vergleichen des Ausgangssignals mit den von einem Computertomographiemodul (130) erhaltenen Informationen, um die Genauigkeit der Fehleridentifikation und -klassifizierung für die Verbundwerkstoffteile zu überprüfen und zu verfeinern.

13. Verfahren nach einem der Ansprüche 10-12, das ferner das Trainieren der Modelle künstlicher Intelligenz (140) unter Verwendung einer Kombination aus realen repräsentativen Teilen umfasst, die sowohl einwandfreie Muster als auch Teile mit in der Fertigungslinie vordefinierten Fehlern enthalten.

14. Verfahren nach einem der Ansprüche 10-13, das ferner das Erstellen jedes Modells aus dem Satz von Modellen künstlicher Intelligenz (140) durch Folgendes umfasst:
- Integrieren einer Eingabeschicht eines Convolutional Neural Network, die eine Anzahl von Neuronen aufweist, die den Abmessungen eines ausgewählten, zu prüfenden Verbundwerkstoffteils (310) und der Auflösung der Prüfung entspricht, wobei die Eingabeschicht so ausgebildet ist, dass sie die von dem Ultraschallprüfgerät erzeugten Rohprüfdaten (120) für jede Position des ausgewählten Verbundwerkstoffteils (310) empfängt,
- Einbeziehen mindestens einer Zwischenschicht des Convolutional Neural Network, die auf der Grundlage des Materials des ausgewählten Verbundwerkstoffteils (310) und einer Anzahl von innerhalb des ausgewählten Verbundwerkstoffteils (310) zu kategorisierenden Fehlern definiert ist,
- Definieren von Parametern für die Konfiguration des neuronalen Netzes, wobei die Parameter aus der Anzahl der enthaltenen internen Schichten, den Gewichten, den Biases und den Aktivierungsfunktionen jedes Neurons ausgewählt werden;
- Integrieren einer Ausgabeschicht des Convolutional Neural Network, die eine Anzahl von Neuronen aufweist, die gleich der Anzahl von Fehlern ist, die gemäß der Liste der Fehlertypen (270) zu kategorisieren sind.

15. Verfahren nach einem der Ansprüche 10-14, das ferner das Definieren der Liste von Fehlertypen (270) umfasst, so dass diese Delaminationen, multiple Delaminationen, Porosität und deren Verteilung, Ablösungen in versteiften Haut-Stringer-Konfigurationen, Falten, Fremdkörper aus dem Herstellungsprozess, Einlagen aus Hilfsmaterial, Lagenwelligkeit, fehlende Schichten, intralaminare Rissnetzwerke sowie Ungenauigkeiten beim Tapen von Verbundwerkstoffen auf der Fertigungslinie umfasst.

## Revendications

1. Système d'inspection non destructive destiné à inspecter des pièces en matériau composite (110, 210) sur une chaîne de production aéronautique, le système comprenant :
- un équipement d'inspection par ultrasons (120) configuré pour générer des données brutes d'inspection des pièces en matériau composite (110, 210) à l'aide d'un réseau phasé, d'une méthodologie de focalisation totale et/ou d'une imagerie par cohérence de phase ;
- un module de tomographie assistée par ordinateur (130) configuré pour obtenir des informations sur les volumes des pièces en matériaux composites (110, 210) ;
le système étant **caractérisé en ce qu'**il comprend en outre des moyens de traitement de données de ressources partagées dans le cloud, configurés pour recevoir et traiter les données brutes d'inspection générées par l'équipement d'inspection par ultrasons (120) et les informations obtenues par le module de tomographie assistée par ordinateur (130), et pour appliquer un ensemble de modèles d'intelligence artificielle (140) créés pour identifier des défauts au sein des pièces en matériau composite (110, 210), les modèles d'intelligence artificielle (140) ayant été entraînés à l'aide d'un ensemble de données d'inspection obtenu à partir de l'équipement d'inspection par ultrasons (120) et du module de tomographie assistée par ordinateur (130), et chaque modèle de l'ensemble de modèles d'intelligence artificielle (140) étant configuré pour classer un type de défauts identifiés selon une liste prédéfinie de types de défauts (270) et fournir des informations de sortie de classification (190).

2. Système selon la revendication 1, dans lequel les ressources partagées dans le cloud comprennent, au sein du cloud (400), des serveurs (410), un espace de stockage (420), des bases de données (430), une plateforme d'intelligence artificielle (440) et des moyens de calcul (450), configurés pour distribuer, stocker et traiter les informations d'inspection contenant les données brutes d'inspection générées par l'équipement d'inspection par ultrasons (120), les informations obtenues par le module de tomographie assistée par ordinateur (130) et les informations de sortie de classification (190) fournies par l'ensemble de modèles d'intelligence artificielle (140).

3. Système selon la revendication 2, dans lequel les ressources partagées dans le cloud mettent en œuvre un mécanisme de sécurité cloud avec une gestion cryptée et sécurisée des informations d'inspection.

4. Système selon l'une quelconque des revendications précédentes, dans lequel les modèles d'intelligence artificielle (140) sont mis en œuvre par un réseau neuronal convolutif configuré pour identifier des motifs permettant de reconnaître des pièces représentatives en matériau composite, de classer les pièces reconnues et d'identifier les types de défauts pour chaque classe de pièces en matériau composite, en fusionnant les données brutes d'inspection générées par l'équipement d'inspection par ultrasons (120) à un noyau de convolution de signaux de motifs afin d'obtenir, par le biais d'un processus d'apprentissage itératif, un signal de sortie comprenant des informations conformes à la liste prédéfinie de types de défauts (270), et en comparant le signal de sortie pixel par pixel aux informations obtenues par le module de tomographie assistée par ordinateur (130).

5. Système selon l'une quelconque des revendications précédentes, dans lequel chaque modèle de l'ensemble de modèles d'intelligence artificielle (140) est configuré pour fournir une sortie de classification (190) qui est filtrée par des critères d'acceptation (280) comprenant des critères de taille, d'emplacement et de densité des défauts identifiés, ainsi qu'un résultat final (290) indiquant si les pièces en matériau composite (110, 210) sont acceptables ou rejetables selon les critères d'acceptation (280).

6. Système selon l'une quelconque des revendications précédentes, dans lequel chaque modèle de l'ensemble de modèles d'intelligence artificielle (140) est créé en :
- intégrant une couche d'entrée d'un réseau neuronal convolutif comprenant un nombre de neurones correspondant aux dimensions d'une pièce en matériau composite sélectionnée (310) en cours d'inspection et à la résolution de l'inspection, ladite couche d'entrée étant configurée pour recevoir les données brutes d'inspection générées par l'équipement d'inspection par ultrasons (120) pour chaque position de la pièce en matériau composite sélectionnée (310),
- incluant au moins une couche intermédiaire du réseau neuronal convolutif définie en fonction du matériau de la pièce en matériau composite sélectionnée (310) et du nombre de défauts à classer au sein de ladite pièce (310),
- définissant des paramètres pour la configuration du réseau neuronal, lesdits paramètres étant choisis parmi le nombre de couches internes incluses, les poids, les biais et les fonctions d'activation de chaque neurone ;
- intégrant une couche de sortie du réseau neuronal convolutif comprenant un nombre de neurones égal au nombre de défauts à classer selon la liste des types de défauts (270).

7. Système selon l'une quelconque des revendications précédentes, dans lequel les données brutes d'inspection comprennent des données de capture matricielle complète (FMC).

8. Système selon l'une quelconque des revendications précédentes, dans lequel la liste des types de défauts (270) est définie pour inclure les délaminations, les délaminations multiples, la porosité et sa distribution, le décollement dans les configurations revêtement-longeron renforcées, les plis, les corps étrangers issus du processus de fabrication, les inserts de matériaux auxiliaires, l'ondulation des plis, les couches manquantes, les réseaux de fissures intralaminaires et les imprécisions dans la pose de bandes de matériaux composites sur la chaîne de production.

9. Système selon l'une quelconque des revendications précédentes, dans lequel les modèles d'intelligence artificielle (140) sont entraînés à l'aide d'une combinaison de pièces réelles représentatives comprenant à la fois des échantillons sains et des pièces présentant des défauts prédéfinis sur la chaîne de production.

10. Procédé d'inspection non destructive de pièces aéronautiques en matériaux composites (110, 210, 310), le procédé comprenant les étapes suivantes :
- générer des données brutes d'inspection d'une pièce en matériau composite (110, 210, 310) à l'aide d'un équipement d'inspection par ultrasons (120) utilisant des techniques de réseau phasé, de focalisation totale et/ou d'imagerie par cohérence de phase ;
- obtenir des informations volumétriques de la pièce en matériau composite (110, 210, 310) à l'aide d'un module de tomographie assistée par ordinateur (130) ;
- recevoir et traiter des données brutes d'inspection générées par l'équipement d'inspection par ultrasons (120) et des informations volumétriques obtenues par le module de tomographie assistée par ordinateur (130) via des moyens de traitement de données de ressources partagées dans le cloud ;
- appliquer un ensemble de modèles d'intelligence artificielle (140) pour identifier les défauts au sein de la pièce en matériau composite (110, 210, 310), les modèles d'intelligence artificielle (140) étant entraînés à l'aide d'un ensemble de données d'inspection obtenu à partir de l'équipement d'inspection par ultrasons (120) et du module de tomographie assistée par ordinateur (130) ;
- classer, selon une liste prédéfinie de types de défauts (270), le type des défauts identifiés dans la pièce en matériau composite (110, 210, 310) à l'aide de chaque modèle de l'ensemble de modèles d'intelligence artificielle (140) ; et
- fournir des informations de sortie de classification (190) pour la pièce en matériau composite (110, 210, 310) sur la base de la classification du type de défauts identifiés au sein de la pièce en matériau composite (110, 210, 310).

11. Procédé selon la revendication 10, comprenant en outre le filtrage de la sortie de classification (190) selon des critères d'acceptation (280) comprenant des critères de taille, d'emplacement et de densité des défauts identifiés, et la fourniture d'un résultat final (290) indiquant si la pièce en matériau composite (110, 210, 310) est acceptable ou doit être rejetable selon les critères d'acceptation (280).

12. Procédé selon l'une quelconque des revendications 10 à 11, dans lequel l'application de l'ensemble de modèles d'intelligence artificielle (140) comprend les étapes consistant à :
- fusionner des données brutes d'inspection générées par un équipement d'inspection par ultrasons (120) avec un noyau de convolution de signaux de motifs afin d'identifier des motifs représentatifs de pièces en matériau composite ;
- reconnaître des classes de pièces en matériau composite sur la base des motifs identifiés, par le biais d'un processus d'apprentissage itératif facilité par le réseau neuronal convolutif ;
- la classification des pièces en matériau composite reconnues en classes spécifiques et l'identification des types de défauts pour chaque classe de pièce en matériau composite, l'identification et la classification étant basées sur une liste prédéfinie de types de défauts (270) ;
- obtenir un signal de sortie provenant du réseau neuronal convolutif, qui comprend des informations relatives aux types de défauts classés grâce au processus d'apprentissage itératif ;
- comparer le signal de sortie, pixel par pixel, avec les informations obtenues par un module de tomographie assistée par ordinateur (130) afin de vérifier et d'affiner la précision de l'identification et de la classification des défauts pour les pièces en matériau composite.

13. Procédé selon l'une quelconque des revendications 10 à 12, comprenant en outre l'entraînement des modèles d'intelligence artificielle (140) à l'aide d'une combinaison de pièces réelles représentatives comprenant à la fois des échantillons sains et des pièces présentant des défauts prédéfinis sur la chaîne de production.

14. Procédé selon l'une quelconque des revendications 10 à 13, comprenant en outre la création de chaque modèle de l'ensemble de modèles d'intelligence artificielle (140) en :
- intégrant une couche d'entrée d'un réseau neuronal convolutif comprenant un nombre de neurones correspondant aux dimensions d'une pièce en matériau composite (310) sélectionnée et soumise à inspection ainsi qu'à la résolution de l'inspection, ladite couche d'entrée étant configurée pour recevoir les données brutes d'inspection générées par l'équipement d'inspection par ultrasons (120) pour chaque position de la pièce en matériau composite (310) sélectionnée
- inclure au moins une couche intermédiaire du réseau neuronal convolutif définie en fonction du matériau de la pièce en matériau composite sélectionnée (310) et du nombre de défauts à classer au sein de ladite pièce en matériau composite sélectionnée (310),
- définir des paramètres pour la configuration du réseau neuronal, lesdits paramètres étant choisis parmi le nombre de couches internes incluses, les poids, les biais et les fonctions d'activation de chaque neurone ;
- intégrer une couche de sortie du réseau neuronal convolutif comprenant un nombre de neurones égal au nombre de défauts à classer selon la liste des types de défauts (270).

15. Procédé selon l'une quelconque des revendications 10 à 14, comprenant en outre la définition de la liste des types de défauts (270) de manière à inclure les délaminations, les délaminations multiples, la porosité et sa distribution, le décollement dans les configurations revêtement-longeron renforcées, les plis, les corps étrangers issus du processus de fabrication, les inserts de matériau auxiliaire, l'ondulation des plis, les couches manquantes, les réseaux de fissures intralaminaires et les imprécisions dans la pose de bandes de matériaux composites sur la chaîne de production.
